# DEMANDE DE BREVET EUROPEEN

(11) **EP 4 521 495 A1**
(43) Date de publication de la demande: **12.03.2025**
(21) Numéro de dépôt: 24199652.9
(22) Date de dépôt: 11.09.2024
(51) Int. Cl.: H01M 8/04029, H01M 8/04007, H01M 8/04223

(54) **VÉHICULE COMPRENANT UN SYSTÈME DE REFROIDISSEMENT ET DE MAINTIEN EN TEMPÉRATURE D'UNE PILE À COMBUSTIBLE**

(30) Priorité: 11.09.2023 FR 2309533
(71) Demandeur: ALSTOM Holdings, 93400 Saint-Ouen-sur-Seine (FR)
(72) Inventeur: AUDEMAR, Christophe, 65310 HORGUES (FR); D'ARBIGNY, Julien, 65000 TARBES (FR)
(74) Mandataire: Lavoix

(57) **Abrégé**

Véhicule (10) comprenant :
- un système de production d'électricité (12) comprenant une pile à combustible (14),
- un système de refroidissement et de maintien en température (16) comportant : un fluide caloporteur (18) ; un échangeur (20) pour refroidir le fluide caloporteur ; et un dispositif (24) de stockage de chaleur comportant un matériau à changement de phase (26).

Le véhicule (10) est mobile entre :
- une configuration de fonctionnement normal, dans laquelle : le système de production d'électricité produit de l'électricité ; au moins une partie du fluide caloporteur est reçue dans l'échangeur ; au moins par moment, le dispositif reçoit au moins une partie du fluide caloporteur,
- une configuration de maintien en température, dans laquelle : au moins une partie du fluide caloporteur est reçue dans le dispositif, le matériau à changement de phase cède de la chaleur à ladite partie du fluide caloporteur, et le fluide caloporteur circule dans le système de production d'électricité.

## Description

La présente invention concerne un véhicule, notamment ferroviaire, comprenant :
- un système de production d'électricité comprenant au moins une pile à combustible, et
- un système de refroidissement de la pile à combustible comportant un fluide caloporteur et au moins un échangeur adapté pour réaliser un échange de chaleur entre le fluide caloporteur et l'atmosphère extérieure pour refroidir le fluide caloporteur.

L'invention concerne également un procédé mettant en oeuvre le véhicule, notamment dans une configuration de fonctionnement normal, dans laquelle le système de production d'électricité produit de l'électricité et la pile à combustible est refroidie par le système de refroidissement.

Il est connu que les piles à combustible, en fonctionnement normal, produisent non seulement de l'électricité, mais aussi de la chaleur évacuée par exemple par échange de chaleur avec un fluide caloporteur lui-même refroidi ensuite dans un échangeur.

D'une façon générale, quelle que soit la technologie ou la nature des piles à combustible actuelles, celles-ci ne peuvent délivrer de la puissance électrique que lorsqu'elles atteignent une certaine température minimale, par exemple autour de 5°C. En dessous de cette température, il existe un risque d'endommager les membranes ou de réduire la durée de vie des piles.

Ainsi, à la suite d'un stockage prolongé d'une pile à combustible dans un environnement à basse température, par exemple lors d'une immobilisation de véhicule en extérieur par une nuit d'hiver, les piles à combustibles sont préchauffées et maintenues à température, généralement à l'aide du fluide caloporteur chauffé par des batteries auxiliaires ou plus rarement par une source d'alimentation électrique externe.

Le préchauffage et le maintien à température entraînent dans tous les cas une consommation d'énergie. En outre, les éventuelles batteries auxiliaires doivent être embarquées et leur puissance est limitée, surtout à froid.

Le préchauffage prend donc un certain temps, typiquement entre 30 minutes et une heure, selon les caractéristiques du circuit à réchauffer et la puissance des éléments chauffants installés. L'énergie nécessaire correspond par exemple à 15 kW pendant une heure pour un train régional.

Un but de l'invention est de fournir un véhicule plus simple d'utilisation et permettant de réduire les coûts de fonctionnement.

A cet effet, l'invention a pour objet un véhicule, selon la revendication 1.

Selon des modes de réalisation particuliers, le véhicule comprend l'une ou plusieurs des caractéristiques correspondant aux revendications 2 à 7, prise(s) isolément ou selon toutes les combinaisons techniquement possibles.

L'invention concerne également un procédé selon la revendication 8.

L'invention sera mieux comprise à la lecture de la description qui va suivre, donnée uniquement à titre d'exemple et faite en se référant aux dessins annexés, sur lesquels :
- la figure 1 est une vue schématique d'un véhicule selon l'invention,
- la figure 2 est une vue schématique, en coupe verticale, d'un dispositif de stockage de chaleur représenté sur la figure 1,
- la figure 3 est une vue schématique, en coupe axiale, d'un dispositif de stockage de chaleur selon une première variante du dispositif de stockage de chaleur représenté sur les figures 1 et 2, et
- la figure 4 est une vue schématique, en coupe axiale, d'un dispositif de stockage de chaleur selon une deuxième variante du dispositif de stockage de chaleur représenté sur les figures 1 et 2.

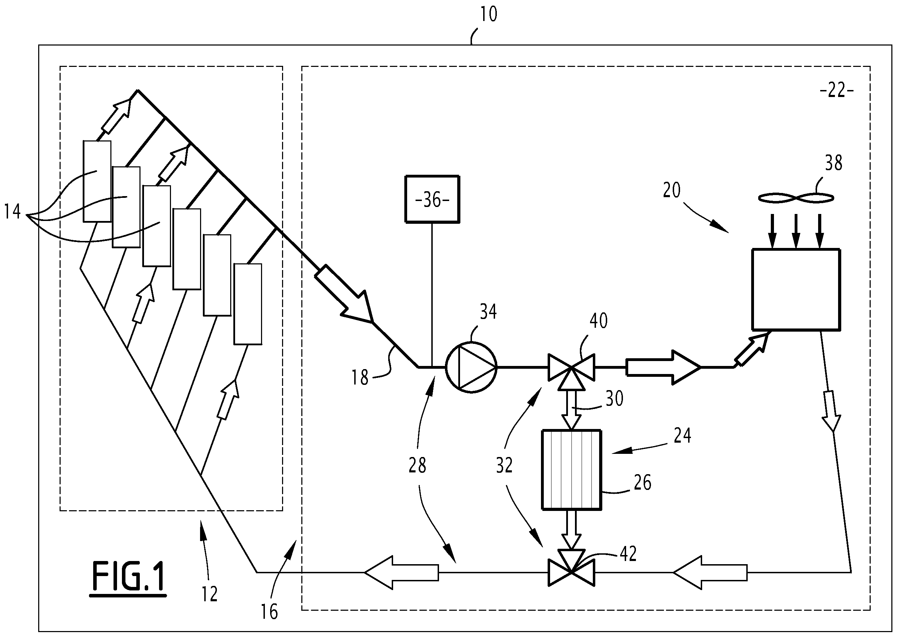

En référence à la figure 1, on décrit un véhicule 10 selon l'invention.

Le véhicule 10 est par exemple un véhicule ferroviaire, tel qu'un train à grande vitesse, un train régional ou un train suburbain ou un tramway.

En variante, le véhicule est par exemple un autobus ou une plateforme navale.

Le véhicule 10 comprend un système de production d'électricité 12 comprenant une pluralité de piles à combustible 14, et un système de refroidissement et de maintien en température 16 comprenant un fluide caloporteur 18.

Le véhicule 10 est mobile entre une configuration de fonctionnement normal, dans laquelle le système de production d'électricité 12 produit de l'électricité et les piles à combustible 14 sont refroidies par le système de refroidissement et de maintien en température 16, et une configuration de maintien en température, dans laquelle les piles à combustible 14 reçoivent de la chaleur du système de refroidissement et de maintien en température 16.

Dans la configuration de maintien en température, selon un mode particulier de réalisation, le système de production d'électricité 12 ne produit pas d'électricité.

Selon un autre mode de réalisation, dans la configuration de maintien en température, le système de production d'électricité 12 peut commencer à produire de l'électricité, par exemple vers la fin du maintien en température.

Dans l'exemple, les piles à combustibles 14 sont au nombre de six.

Selon des variantes non représentées, le système de production d'électricité 12 comprend moins de six piles à combustibles, par exemple une seule, ou plus de six piles à combustible.

Chacune des piles à combustible 14 est par exemple adaptée pour être traversée par le fluide caloporteur 18, et pour lui céder de la chaleur dans la configuration de fonctionnement normal, ou pour en recevoir de la chaleur dans la configuration de maintien en température.

Les piles à combustibles 14 sont par exemple prévues pour fonctionner normalement à une température de fonctionnement, par exemple comprise entre 65°C et 70°C. Le maintien en température a pour but de maintenir les piles à combustible 14 à une température supérieure à une température minimale de fonctionnement.

La température minimale de fonctionnement est par exemple d'environ 5°C et peut varier selon les technologies de piles à combustible. Au-delà de cette température, les piles à combustibles 14 peuvent être activées et donc délivrer un peu de puissance. Le véhicule 10 peut alors démarrer sa mission à puissance réduite.

Les pertes thermiques des piles à combustibles 14 sont à leur tour transférées dans le système de refroidissement et de maintien en température 16, ce qui va aider à monter la température du fluide caloporteur 18 jusqu'à une valeur, par exemple environ 50°C, à partir de laquelle les piles à combustible 14 sont utilisables à pleine puissance.

Dans l'exemple, les piles à combustible 14 sont montées en dérivation, c'est-à-dire que le fluide caloporteur 18 se divise avant d'entrer dans les piles à combustible, puis se recombine après les piles à combustible, par exemple avant d'entrer dans le système de refroidissement et de maintien en température 16.

Outre le fluide caloporteur 18, le système de refroidissement et de maintien en température 16 comporte un échangeur 20 adapté pour réaliser un échange de chaleur entre le fluide caloporteur 18 et l'atmosphère extérieure 22 pour refroidir le fluide caloporteur, et au moins un dispositif 24 de stockage de chaleur comportant un matériau à changement de phase 26.

Selon des variantes non représentées, le système de refroidissement et de maintien en température 16 comprend plus d'un échangeur et/ou plus d'un dispositif de stockage de chaleur.

Dans l'exemple, le système de refroidissement et de maintien en température 16 comprend une boucle 28 adaptée pour conduire le fluide caloporteur 18 chauffé depuis le système de production d'électricité 12 vers l'échangeur 20, et pour conduire le fluide caloporteur 18 refroidi depuis l'échangeur 20 vers le système de production d'électricité 12. Dans l'exemple, le système de refroidissement et de maintien en température 16 comprend une branche 30 montée sur la boucle 28 en dérivation de l'échangeur 20 et adaptée pour conduire dans le dispositif 24 au moins une partie du fluide caloporteur 18 circulant dans la boucle. Dit autrement, l'échangeur 20 et le dispositif 24 sont montés en parallèle l'un de l'autre en ce qui concerne le fluide caloporteur 18.

Selon une variante non représentée, le dispositif 24 et l'échangeur 20 sont en série, avec une possibilité de court-circuiter l'échangeur 20 dans la configuration de maintien en température.

Avantageusement, le système de refroidissement et de maintien en température 16 comprend en outre un dispositif 32 de gestion du fluide caloporteur 18.

Dans l'exemple, système de refroidissement et de maintien en température 16 comprend au moins une pompe 34 de circulation du fluide caloporteur, et un vase d'expansion 36.

Le fluide caloporteur 18 est par exemple de l'eau, ou de l'eau glycolée.

L'échangeur 20 comprend par exemple un ventilateur 38 adapté pour souffler de l'air afin de refroidir le fluide caloporteur 18.

Le dispositif 32 de gestion est avantageusement adapté, dans la configuration de maintien en température, pour que le fluide caloporteur 18 en provenance du système de production d'électricité 12 circule dans la branche 30, puis retourne au système de production d'électricité 12, avantageusement sans passer par l'échangeur 20.

Le dispositif 32 de gestion est avantageusement adapté, dans la configuration de fonctionnement normal, pour au moins de temps en temps, diriger au moins une partie du fluide caloporteur 18 chauffé par le système de production d'électricité 12 vers la branche 30 pour qu'au moins ladite partie du fluide caloporteur 18 traverse le dispositif 24 avant de retourner au système de production d'électricité 12.

Le dispositif 32 de gestion comprend par exemple deux vannes 40,42 à trois voies situées aux extrémités de la branche 30.

Le dispositif 24 de stockage de chaleur est adapté, dans la configuration de fonctionnement normal, pour recevoir au moins une partie du fluide caloporteur 18 chauffé par le système de production d'électricité 12, le matériau à changement de phase 26 recevant de la chaleur provenant de ladite partie du fluide caloporteur et la stockant sous forme de chaleur latente en changeant au moins partiellement d'état.

Le dispositif 24 de stockage de chaleur est adapté, dans la configuration de maintien en température, pour recevoir au moins une partie du fluide caloporteur 18, le matériau à changement de phase cédant de la chaleur à ladite partie du fluide caloporteur en changeant au moins partiellement d'état.

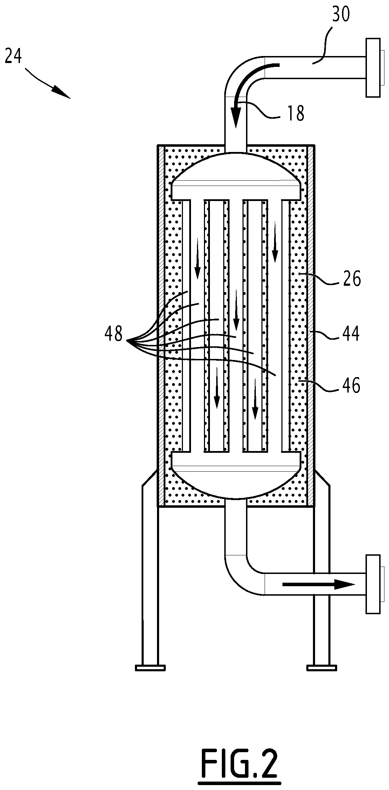

Comme visible sur la figure 2, le dispositif 24 comprend par exemple une cuve 44 définissant un volume intérieur 46 contenant le matériau à changement de phase 26, et une pluralité de tuyaux 48 pour véhiculer le fluide caloporteur 18.

Les tuyaux 48, par exemple verticaux, traversent le volume intérieur 46 et sont en contact thermique avec le matériau à changement de phase 26.

Le matériau à changement de phase 26 présente une température de fusion inférieure à la température de fonctionnement normal des piles à combustible 14. La température de fusion est de préférence inférieure à 80°C, de manière encore plus préférée inférieure à 68°C, de manière encore plus préférée inférieure à 60°C, de manière encore plus préférée inférieure à 55°C et de manière encore plus préférée inférieure à 40°C.

Le matériau à changement de phase 26 présente une température de fusion supérieure à la température minimale de fonctionnement des piles à combustible 14. La température de fusion est de préférence supérieure à 5°C et de manière encore plus préférée supérieure à 20°C.

Le matériau à changement de phase 26 est adapté pour stocker de l'énergie notamment sous forme de chaleur latente lorsque le véhicule 10 est en fonctionnement. Le matériau à changement de phase 26 est alors en phase liquide. Le matériau à changement de phase 26 est adapté pour restituer l'énergie sous forme de chaleur latente lorsque sa température passe en dessous de sa température de fusion et qu'il se solidifie. Le matériau à changement de phase 26 est adapté pour être rechargé en énergie en le chauffant à nouveau à une température supérieure à sa température de fusion.

Le matériau à changement de phase 26 est par exemple une paraffine ou de l'acétate de sodium trihydraté.

En variante, le matériau à changement de phase 26 est de l'acide laurique, myristique ou stéarique.

La quantité de matériau à changement de phase 26 dans le dispositif 24 est par exemple comprise entre 10 et 100 kg, et est par exemple d'environ 20 kg.

Le fonctionnement du véhicule 10 va maintenant être décrit.

Dans la configuration de fonctionnement normal, le système de production d'électricité produit de l'électricité 12, par exemple utilisée pour la propulsion du véhicule 10 et/ou pour des besoins internes, tels que le chauffage, la climatisation et l'éclairage du véhicule 10. Les piles à combustible 14 dégagent de la chaleur, et sont refroidies par le système de refroidissement et de maintien en température 16 qui les maintient à leur température de fonctionnement normal.

Le fluide caloporteur 18 est mis en mouvement, avantageusement par la pompe 34.

Le fluide caloporteur 18, préalablement refroidi, entre dans les piles à combustible 14, reçoit la chaleur dégagée par les piles à combustible et est chauffé à une température avantageusement proche de la température de fonctionnement normal des piles à combustible, et supérieure à la température de fusion du matériau à changement de phase 26.

Puis, le fluide caloporteur 18 entre dans la boucle 28 du système de refroidissement et de maintien en température 16. Au moins une partie du fluide caloporteur 18 passe dans l'échangeur 20 et y est refroidi, avant d'être renvoyée dans le système de production d'électricité 12. Au moins à certains moments, au moins une partie du fluide caloporteur 18 emprunte la branche 30 et traverse dans le dispositif 24. Dans le dispositif 24, le fluide caloporteur 18 cède de la chaleur au matériau à changement de phase 26 si ce dernier est plus froid.

Par exemple, le matériau à changement de phase 26 est initialement intégralement solide, car il a servi à préchauffer le système de production d'électricité 12. La chaleur reçue par le matériau à changement de phase 26 le fait progressivement fondre. Avantageusement, après un certain temps, le matériau à changement de phase 26 est intégralement liquide.

Selon un mode particulier de fonctionnement, le dispositif 32 de gestion dirige en permanence une fraction, avantageusement majoritaire, du fluide caloporteur 18 vers l'échangeur 20 et une autre fraction, avantageusement minoritaire, du fluide caloporteur 18 vers le dispositif 24.

Ensuite, le véhicule 10 est mis à l'arrêt, par exemple la nuit, et se refroidit. Le matériau à changement de phase 26 est initialement à une température élevée, supérieure ou égale à sa température de fusion. Le matériau à changement de phase 26 se refroidit progressivement. Lorsque sa température atteint sa température de fusion, il repasse en phase solide. Le matériau à changement de phase 26 restitue progressivement des calories au fluide caloporteur 18 dans le dispositif 24. Cela a pour effet de retarder la baisse de température du fluide caloporteur 18 et avantageusement de mettre en mouvement le fluide caloporteur, qui circule dans les piles à combustibles 14 pour les maintenir en température.

L'objectif est par exemple qu'au bout de la durée de stockage, la température du fluide caloporteur 18 et des piles à combustible 14 soit supérieure ou égale à la température minimale, par exemple environ 5°C, autorisant la mise en fonctionnement des piles à combustible à puissance réduite. A la fin de la période de stockage du véhicule 10, le matériau à changement de phase 26 est normalement en partie solidifié, voire totalement solidifié.

Dans la configuration de maintien en température, la branche 30 est avantageusement isolée de l'échangeur 20. Ainsi, la chaleur du matériau à changement de phase 26 est libérée uniquement dans une boucle de fluide caloporteur 18 plus réduite, sans l'échangeur 20. Il y a dans ce cas moins de déperdition thermique, et il est alors plus facile de maintenir le fluide caloporteur 18 au-dessus de la température minimale, dans l'exemple d'environ 5°C.

Avantageusement, le fluide caloporteur 18 maintenu en température circule par convection naturelle dans le système de production d'électricité 12.

De préférence, le véhicule 10 est dans la configuration de maintien en température durant toute son immobilisation, afin d'éviter un refroidissement trop important des piles à combustible 14. Les piles à combustible 14 sont maintenues à une température suffisante, au-dessus de la température minimale de mise en fonctionnement, et sont démarrées lorsque leur température atteint un niveau suffisant, éventuellement en régime réduit.

Grâce aux caractéristiques décrites ci-dessus, le véhicule 10 est plus simple d'utilisation et permet de réduire les coûts de fonctionnement. Le système de refroidissement et de maintien en température 16 réduit l'énergie dépensée par le véhicule 10. Le véhicule 10 a besoin de moins de batteries dédiées au préchauffage, ou n'en a pas du tout.

Les propriétés de changement d'état du matériau à changement de phase 26 permettent de garantir, durant toute la durée du stockage, que le matériau à changement de phase reste à une température suffisante pour le maintien en température du fluide caloporteur 18 et des piles à combustible 14.

L'invention permet de valoriser les déperditions thermiques des piles à combustible 14.

Dans certains cas, aucune énergie complémentaire (prise de quai ou batterie) n'est utilisée pour réaliser le maintien en température.

Ceci permet des économies conséquentes, d'environ 15 kWh, sur la batterie dont la capacité est par exemple de 110 kWh.

La fiabilité est améliorée, car la solution est « passive », en ce sens que les changements d'état du matériau à changement de phase 26 ne sont provoqués que par des différences de température. Ceci diminue le nombre de composants susceptibles de tomber en panne, et améliore le temps moyen entre pannes du véhicule 10, ou MTBF (en anglais *mean time between failures*)*.*

L'invention diminue aussi le risque de sur-température provoqué par un dysfonctionnement du système de maintien en température, et donc le risque d'endommager les piles à combustible 14.

Ainsi, la disponibilité du véhicule 10 est améliorée. Le véhicule 10, par exemple un train, peut démarrer sa mission, éventuellement à performances réduites au départ, dès l'arrivée du conducteur, grâce à la configuration de maintien en température.

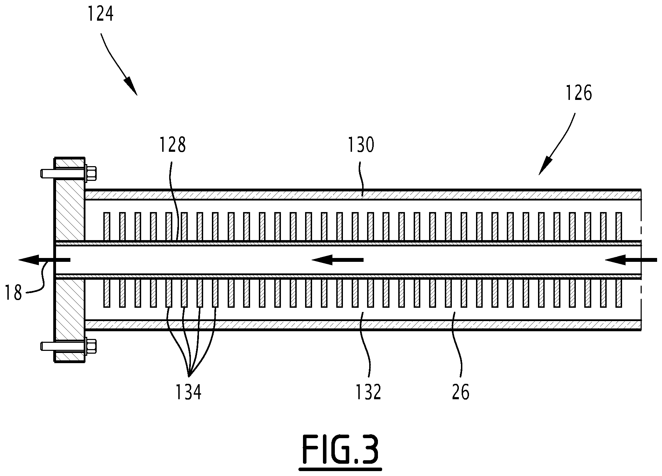

En référence à la figure 3, on décrit un dispositif 124 de stockage de chaleur constituant une première variante du dispositif 24. Le dispositif 124 est analogue au dispositif 24 représenté sur les figures 1 et 2. Les éléments similaires porte les mêmes références numériques et ne seront pas décrits à nouveau. Seules les différences sont décrites en détail ci-après.

Le dispositif 124 est modulaire et comprend au moins un module 126.

En variante (non représentée), le dispositif 124 comprend plusieurs modules analogues au module 126.

Le module 126 comporte un tuyau central 128 pour véhiculer le fluide caloporteur 18, et une enveloppe 130 entourant le tuyau central et définissant un espace 132 contenant le matériau à changement de phase 26. Le dispositif 124 comprend des ailettes 134 formant par exemple des disques s'étendant radialement à partir du tuyau central 128 dans ledit espace 132 et qui sont en contact thermique avec le matériau à changement de phase 26.

Disposer d'ailettes, ou équivalents, environnés par le matériau à changement de phase 26 permet de limiter les effets de la faible conductivité de ces matériaux, et donc de faciliter la cinétique de changement de phase.

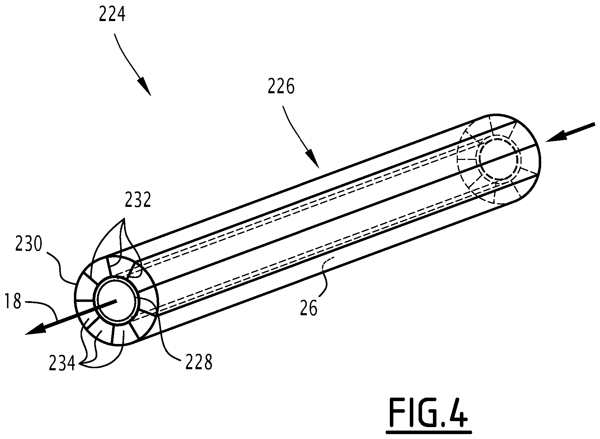

En référence à la figure 4, on décrit un dispositif 224 de stockage de chaleur constituant une deuxième variante du dispositif 24. Le dispositif 224 est analogue au dispositif 24 représenté sur les figures 1 et 2. Les éléments similaires porte les mêmes références numériques et ne seront pas décrits à nouveau. Seules les différences sont décrites en détail ci-après.

Le dispositif 224 est modulaire et comprend au moins un module 226.

En variante (non représentée), le dispositif 224 comprend plusieurs modules analogues au module 226.

Le module 226 comporte un tuyau central 228 pour véhiculer le fluide caloporteur 18, et une enveloppe 230 entourant le tuyau central. Le module 226 comprend des cloisons 232 s'étendant le long du tuyau central 228 et radialement à partir du tuyau central jusqu'à l'enveloppe 230.

Le tuyau central 228, les cloisons 232 et l'enveloppe 230 définissent ensemble une pluralité de secteurs 234 contenant le matériau à changement de phase 26, le matériau à changement de phase étant en contact thermique avec les cloisons 232 et le tuyau central 228.

Avantageusement, les variantes décrites ci-dessus améliorent éventuellement le contact thermique entre le fluide caloporteur 18 et le matériau à changement de phase 26, et améliorent la cinétique des changements de phase.

## Revendications

1. Véhicule (10), notamment ferroviaire, comprenant :
- un système de production d'électricité (12) comprenant au moins une pile à combustible (14), et
- un système de refroidissement et de maintien en température (16) de la pile à combustible (14) comportant : un fluide caloporteur (18) ; au moins un échangeur (20) adapté pour réaliser un échange de chaleur entre le fluide caloporteur (18) et l'atmosphère extérieure (22) pour refroidir le fluide caloporteur (18) ; et au moins un dispositif (24 ; 124 ; 224) de stockage de chaleur comportant un matériau à changement de phase (26),
le véhicule (10) étant mobile entre :
- une configuration de fonctionnement normal, dans laquelle : le système de production d'électricité (12) produit de l'électricité et la pile à combustible (14) est refroidie par le système de refroidissement et de maintien en température (16) ; au moins une partie du fluide caloporteur (18) chauffé par le système de production d'électricité (12) est reçue dans l'échangeur (20), refroidie et renvoyée dans le système de production d'électricité (12) ; et au moins par moment, le dispositif (24 ; 124 ; 224) reçoit au moins une partie du fluide caloporteur (18) chauffé par le système de production d'électricité (12), et le matériau à changement de phase (26) reçoit de la chaleur provenant de ladite partie du fluide caloporteur (18) et la stocke sous forme de chaleur latente en changeant au moins partiellement d'état, et
- une configuration de maintien en température, dans laquelle : au moins une partie du fluide caloporteur (18) est reçue dans le dispositif (24 ; 124 ; 224), le matériau à changement de phase (26) cède de la chaleur à ladite partie du fluide caloporteur (18) en changeant au moins partiellement d'état, et le fluide caloporteur (18) circule dans le système de production d'électricité (12) pour maintenir en température la pile à combustible (14),
dans lequel le dispositif (124) comprend au moins un module (126) comprenant : un tuyau central (128) pour véhiculer le fluide caloporteur (18), une enveloppe (130) entourant le tuyau central (128) et définissant un espace (132) contenant le matériau à changement de phase (26), et des ailettes (134) formant des disques s'étendant radialement à partir du tuyau central (128) dans ledit espace et en contact thermique avec le matériau à changement de phase (26) ; et/ou
dans lequel le dispositif (224) comprend au moins un module (226) comprenant :
- un tuyau central (228) pour véhiculer le fluide caloporteur (18), et
- une enveloppe (230) entourant le tuyau central et des cloisons (232) s'étendant le long du tuyau central (228) et radialement à partir du tuyau central (228) jusqu'à l'enveloppe (230), le tuyau central (228), les cloisons (232) et l'enveloppe (230) définissant ensemble une pluralité de secteurs (234) contenant le matériau à changement de phase (26), le matériau à changement de phase (26) étant en contact thermique avec les cloisons (232) et le tuyau central (228).

2. Véhicule (10) selon la revendication 1, dans lequel le matériau à changement de phase (26) présente une température de fusion inférieure à 80°C.

3. Véhicule (10) selon la revendication 2, dans lequel le matériau à changement de phase (26) présente une température de fusion inférieure à 60°C.

4. Véhicule (10) selon l'une quelconque des revendications 1 à 3, dans lequel le matériau à changement de phase (26) comprend une paraffine ou de l'acétate de sodium trihydraté.

5. Véhicule (10) selon l'une quelconque des revendications 1 à 4, dans lequel le système de refroidissement et de maintien en température (16) comprend :
- une boucle (28) adaptée pour conduire le fluide caloporteur (18) chauffé depuis le système de production d'électricité (12) vers l'échangeur (20), et pour conduire le fluide caloporteur (18) refroidi depuis l'échangeur (20) vers le système de production d'électricité (12), et
- une branche (30) montée sur la boucle (28) en dérivation de l'échangeur (20) et adaptée pour conduire au moins une partie du fluide caloporteur (18) dans le dispositif (24 ; 124 ; 224).

6. Véhicule (10) selon la revendication 5, dans lequel le système de refroidissement et de maintien en température (16) comprend en outre un dispositif (32) de gestion du fluide caloporteur (18) adapté pour :
- dans la configuration de maintien en température, isoler la branche (30) de l'échangeur (20), et
- dans la configuration de fonctionnement normal, au moins de temps en temps, diriger au moins une partie du fluide caloporteur (18) chauffé par le système de production d'électricité (12) vers la branche (30) pour qu'au moins ladite partie du fluide caloporteur (18) traverse le dispositif (24 ; 124 ; 224) avant de retourner au système de production d'électricité (12).

7. Véhicule (10) selon l'une quelconque des revendications 1 à 6, dans lequel le dispositif (24) comprend :
- une cuve (44) définissant un volume intérieur (46) contenant le matériau à changement de phase (26), et
- une pluralité de tuyaux (48) pour véhiculer le fluide caloporteur (18), les tuyaux (48) traversant le volume intérieur (46) et étant en contact thermique avec le matériau à changement de phase (26).

8. Procédé mettant en oeuvre un véhicule (10), notamment ferroviaire, selon l'une quelconque des revendications 1 à 7, le procédé comprenant les étapes suivantes :
- mise du véhicule (10) dans la configuration de maintien en température, avec réception d'au moins une partie du fluide caloporteur (18) dans le dispositif (24 ; 124 ; 224), le matériau à changement de phase (26) cédant de la chaleur à ladite partie du fluide caloporteur (18) en changeant au moins partiellement d'état, et le fluide caloporteur (18) circulant dans le système de production d'électricité (12) pour maintenir en température la pile à combustible (14), et
- mise du véhicule (10) dans la configuration de fonctionnement normal, avec production d'électricité par le système de production d'électricité (12), la pile à combustible (14) étant refroidie par le système de refroidissement et de maintien en température (16), au moins une partie du fluide caloporteur (18) chauffé par le système de production d'électricité (12) étant reçue dans l'échangeur (20), refroidie et renvoyée dans le système de production d'électricité (12), et le dispositif (24 ; 124 ; 224) recevant, au moins par moment, au moins une partie du fluide caloporteur (18) chauffé par le système de production d'électricité (12), le matériau à changement de phase (26) recevant de la chaleur provenant de ladite partie du fluide caloporteur (18) et la stockant sous forme de chaleur latente en changeant au moins partiellement d'état.
